# FASCICULE DE BREVET EUROPEEN

(11) **EP 2 123 525 B1**
(45) Date de publication et mention de la délivrance du brevet: **17.09.2014**
(21) Numéro de dépôt: 09159856.5
(22) Date de dépôt: 11.05.2009
(51) Int. Cl.: B60S 1/48

(54) **Procédé et module de commande d'un système de lave-vitre intégré a un système d'essuyage pour véhicule automobile, et système d'essuyage correspondant**
Verfahren und Modul zum Kontrollieren einer in ein Fahrzeug integrierten Scheibenreinigungsanlage und entsprechende Wischanlage.
Control process and module for a windscreen washing system integrated into an automotive vehicle and corresponding wiper system.

(30) Priorité: 19.05.2008 FR 0802683
(43) Date de publication de la demande: 25.11.2009
(73) Titulaire: Valeo Systèmes d'Essuyage, 78321 La Verrière (FR)
(72) Inventeur: Jarasson, Jean-Michel M., 789901, Elancourt (FR); Caillot, Gérald, 78320, LE MESNIL SAINT DENIS (FR); Grandjean, Denis, 78660, ABLIS (FR); Calluiere, Johan, 78370, PLAISIR (FR)
(74) Mandataire: Léveillé, Christophe

(56) Documents cités:
- EP-A- 0 781 693
- DE-A1- 19 653 432
- GB-A- 2 326 083
- US-A- 4 275 477

## Description

La présente invention concerne la commande d'un système de lave-vitre intégré à un système d'essuyage d'une surface vitrée de véhicule automobile, telle que le pare-brise et/ou la lunette arrière.

Dans les systèmes de lave-vitre existant à ce jour, il est connu de prévoir que le liquide de lavage ne soit diffusé que sur une partie seulement de la course vers le haut et/ou vers le bas du balai sur la surface vitrée.

Ainsi, des systèmes de lave-vitre permettant de commander l'aspersion lorsque le ou les bras porte-balai sont dans des zones angulaires prédéfinies ont déjà été développés.

Il est également connu qu'un nettoyage amélioré d'une surface vitrée du véhicule automobile peut être obtenu en prévoyant d'amener le liquide de lavage alternativement à droite ou à gauche de la lame ou balai du système d'essuyage, selon que le balai se déplace vers le bas de la surface ou vers le haut de la surface, de façon à ce que le liquide arrose effectivement une portion de la surface vitrée qui va immédiatement être balayée par le balai d'essuyage. Pour ce faire, une partie du système de lavage, notamment les gicleurs et portions des conduits d'amenée du liquide vers les gicleurs, est intégrée directement au niveau du ou des bras, ou encore des balais, du système d'essuyage. Ainsi, on connaît notamment du document GB 2 326 083 un système d'essuyage présentant un tel système de lave-vitre intégré, dans lequel deux pompes d'extraction du liquide sont utilisées, une première pompe pour amener l'eau à l'avant du balai, une deuxième pompe pour amener l'eau à l'arrière du balai, les deux pompes étant alternativement commandées pour pouvoir chacune envoyer le jet correspondant au moment voulu au gicleur correspondant. En variante, ce document enseigne qu'il est possible de remplacer les deux pompes précédentes par une seule pompe en association avec une valve hydraulique de commutation commandée par le moteur d'entraînement, qui va diriger le liquide d'un coté ou de l'autre du balai d'essuyage, ou encore par une pompe unique bidirectionnelle, destinée à être reliée audit réservoir (voire éventuellement immergée à l'intérieur du réservoir), la pompe bidirectionnelle étant apte à être entraînée dans deux sens opposés de rotation sous la commande de signaux de contrôles électriques délivrés par le moteur d'entraînement du bras porte-balai.

Quel que soit le système utilisé, la zone de la surface vitrée au niveau de laquelle le liquide de lavage doit être effectivement aspergé sur un cycle de balayage du bras d'essuyage, à la montée et/ou à la descente, doit être déterminée pour chaque véhicule automobile de manière à gêner le moins possible le conducteur du véhicule, tout en garantissant un nettoyage efficace de la surface vitrée par l'action combinée de l'aspersion de liquide et de l'essuyage. Cette zone étant déterminée, il est nécessaire de pouvoir déterminer les instants de déclenchement puis d'arrêt de l'aspersion de liquide lors d'un cycle de balayage.

Certaines méthodes connues prévoient de contrôler l'aspersion en fonction de la position angulaire du ou des bras porte-balai lors d'un cycle de balayage. La position angulaire du bras d'essuyage étant elle-même fonction de la position angulaire de l'arbre du moteur d'entraînement de ce bras, ces méthodes prévoient d'équiper l'arbre du moteur d'essuyage d'une came liée à rotation concentriquement à cet arbre, et coopérant avec des contacts ou frotteurs pour délivrer un signal de commande d'aspersion de liquide pour certaines positions angulaires seulement de l'arbre d'entrainement. Par exemple, le document US 4, 275, 477 décrit un système de lave-vitre structurellement indépendant du système d'essuyage, notamment par le fait que les gicleurs sont fixes par rapport au capot du véhicule. Les deux systèmes coopèrent cependant étroitement du fait qu'une partie du liquide de lavage contenu dans le réservoir de nettoyage est prélevée par une pompe en utilisant des informations et commandes électriques données par une came située sur le moteur d'entraînement du bras porte-balai. Plus précisément, dans ce système, on prévoit qu'il n'y ait aucune aspersion de liquide lorsque le bras arrive à proximité du jet du gicleur.

L'avantage de ces systèmes est qu'ils garantissent la maîtrise de l'aspersion sur la zone voulue de surface vitrée, et ce, indépendamment des conditions d'utilisation du véhicule.

Néanmoins, l'inconvénient majeur de ces systèmes est qu'il est nécessaire de développer un système par modèle de véhicule. En effet, le profil de la came et le positionnement des frotteurs doivent être définis pour chaque véhicule auquel le système d'essuyage est destiné. Ainsi, de telles solutions sont coûteuses à développer.

La présente invention a pour objectif de pallier les inconvénients des systèmes connus en proposant une solution qui permette une aspersion très précise d'une zone de surface vitrée déterminée, sans nécessiter pour autant d'adaptation particulière du système d'essuyage, et qui plus est, très facilement adaptable à tout système d'essuyage à lave-vitre intégré.

Ainsi, la présente invention a pour premier objet un procédé de commande d'un système de lave-vitre intégré à un système d'essuyage d'une surface vitrée de véhicule automobile, ledit système d'essuyage comprenant un moteur d'essuyage pour l'entraînement en rotation d'au moins un bras porte-balai, et le système de lave-vitre comportant au moins un gicleur disposé sur ledit bras porte-balai ou sur le balai, et apte à délivrer, sur un cycle d'essuyage, au moins un jet de liquide en avant du balai par rapport à la direction de balayage pendant au moins une première période d'activation du système de lave-vitre définie entre un instant de déclenchement de l'aspersion du liquide et un instant d'arrêt de l'aspersion du liquide, **caractérisé en ce qu**'il consiste à estimer en temps réel, sur chaque cycle d'essuyage, les variations de vitesse du bras porte-balai sur la surface vitrée en fonction de paramètres relatifs aux conditions d'utilisation du véhicule, puis à adapter en conséquence l'instant de déclenchement et/ou l'instant d'arrêt de l'aspersion.

En utilisant des informations sur les conditions d'utilisation du véhicule pour estimer les variations de vitesse de l'essuyage et en déduire les variations à appliquer sur l'instant de déclenchement et/ou d'arrêt de l'aspersion du lave-vitre, on garantit que c'est bien la même zone de la surface vitrée qui sera arrosée en toutes circonstances. Par ailleurs, le fait d'utiliser des informations sur les conditions d'utilisation du véhicule généralement disponibles par ailleurs, permet d'appliquer le procédé de l'invention à tout système d'essuyage, sans nécessiter d'adaptation particulière de ce système en tant que tel.

De préférence, les variations de vitesse du bras porte-balai sont estimées à partir d'une information sur la vitesse théorique de balayage du système d'essuyage et d'une information sur la vitesse du véhicule.

Avantageusement, les variations de vitesse du bras porte-balai pourront être estimées en outre à partir d'une mesure de la température extérieure au véhicule, et/ou d'une information relative à la détection de pluie, et/ou d'une information relative à la détection de salissures sur la surface vitrée et/ou d'une information relative à la consommation du moteur d'entraînement du système d'essuyage.

La présente invention a également pour objet un module de commande d'un système de lave-vitre intégré à un système d'essuyage d'une surface vitrée de véhicule automobile, ledit système d'essuyage comprenant un moteur d'essuyage pour l'entraînement en rotation d'au moins un bras porte-balai, et le système de lave-vitre comportant au moins une pompe apte à être reliée à un réservoir de liquide de lavage et à au moins un gicleur disposé sur ledit bras porte-balai ou sur le balai, ladite pompe étant commandée par un signal de commande de façon à délivrer, sur un cycle d'essuyage, au moins un jet de liquide en avant du balai par rapport à la direction de balayage pendant au moins une première période d'activation du système de lave-vitre définie entre un instant de déclenchement de l'aspersion du liquide et un instant d'arrêt de l'aspersion du liquide, **caractérisé en ce qu**'il comporte des moyens de calcul aptes à recevoir différentes informations relatives aux conditions d'utilisation du véhicule permettant d'estimer en temps réel, sur chaque cycle d'essuyage, les variations de vitesse du bras porte-balai sur la surface vitrée, et à adapter en conséquence l'instant de déclenchement et/ou d'arrêt du signal de commande.

La présente invention a en outre pour objet un système d'essuyage comportant le module de commande défini précédemment.

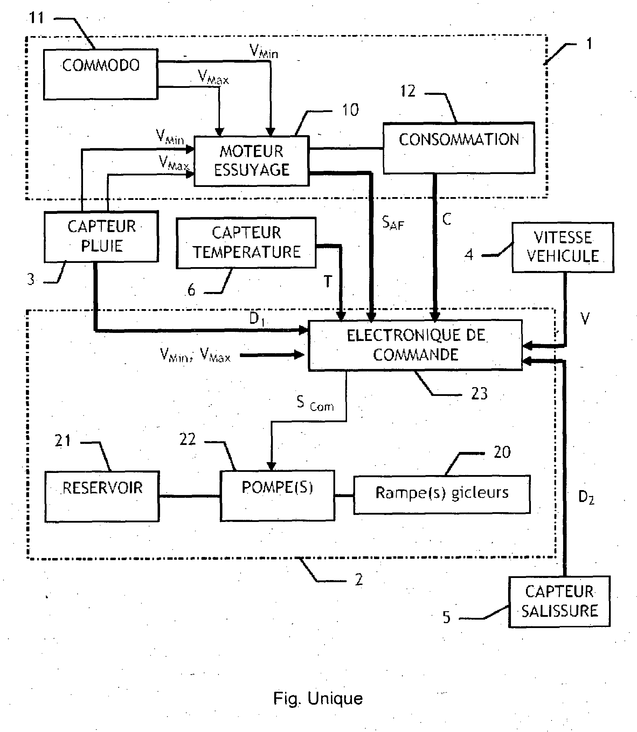

La présente invention et les avantages qu'elle procure seront mieux compris au vu de la description suivante d'un exemple non limitatif d'un système d'essuyage à lave-vitre intégré faite en référence à la figure unique annexée.

Sur cette figure, on a représenté sous forme de synoptique simplifié, certains éléments d'un système d'essuyage équipé d'un système de lave-vitre intégré, ainsi que les différentes liaisons avec différents éléments compris ou non dans le système d'essuyage, permettant la mise en oeuvre du procédé de commande du système lave-vitre selon l'invention.

Plus précisément, un système permettant de mettre en oeuvre le procédé de commande selon l'invention comporte :
- une première partie d'éléments propres au fonctionnement du système d'essuyage, représentée schématiquement dans un sous-ensemble portant la référence 1 ;
- une deuxième partie d'éléments propres au fonctionnement du système de lave-vitre, représentée schématiquement dans un sous-ensemble portant la référence 2 ;
- différents éléments tels qu'un capteur 3 de pluie, un capteur 4 de vitesse du véhicule, un capteur 5 du degré de salissure de la surface vitrée, ou un capteur 6 de température extérieure, éventuellement un capteur d'hydrométrie (non représenté), ces différents éléments ne faisant pas partie nécessairement du système d'essuyage 1 ou de lave-vitre 2 à proprement dit. Ces différents éléments permettent de déterminer différents paramètres relatifs à certaines conditions d'utilisation du véhicule.

La première partie 1 propre au fonctionnement du système d'essuyage comprend classiquement un moteur d'essuyage 10 permettant d'entraîner en rotation alternée au moins un bras porte-balai (non représenté). Le moteur d'essuyage 10 est par exemple monodirectionnel, et la rotation alternée du bras porte-balai peut être classiquement obtenue grâce à mécanisme de liaison non représenté, appelé timonerie, entre l'arbre d'entraînement du moteur, et le bras porte-balai. La rotation du moteur d'essuyage est commandée soit de façon manuelle, par exemple par l'activation d'un commodo 11 par le conducteur, soit de façon automatique, par exemple suite à la détection de pluie par le capteur 3 de pluie. Dans les deux cas, le moteur d'essuyage peut être commandé pour tourner selon au moins deux vitesses de rotation, une petite vitesse V_{Min} et une grande vitesse V_{Max}. Un mode intermittent, qui peut être assimilé à la petite vitesse de rotation, existe aussi dans la plupart des systèmes.

Pour ce qui concerne la deuxième partie relative au fonctionnement du système de lave-vitre, ledit système comporte ici, à titre d'exemple non limitatif, deux gicleurs ou deux séries de gicleurs 20 disposés ou non en rampe sur le bras porte-balai ou encore au niveau du balai. Le système de lave-vitre est ainsi intégré au système d'essuyage et les gicleurs suivent le mouvement du bras porte-balai lors d'un cycle d'essuyage. Les deux gicleurs ou série de gicleurs 20 sont disposés sur le bras ou sur le balai de manière à pouvoir diriger deux jets de liquide de part et d'autre du balai. Ces deux gicleurs ou séries de gicleurs 20 sont alimentés en liquide de lavage contenu dans un réservoir 21 par l'intermédiaire d'une pompe bidirectionnelle 22. Selon le sens de rotation de la pompe bidirectionnelle 22, seul un gicleur ou une série de gicleurs permet effectivement, sur une portion de balayage donnée, de générer un ou plusieurs jets. Le sens de rotation de la pompe doit être déterminé de façon à ce que le jet soit toujours orienté en avant du balai par rapport à la direction de balayage du bras porte-balai. Ainsi, sur la moitié du cycle de balayage correspondant au déplacement du bras de sa position dite d'arrêt fixe vers sa position en haut de la surface vitrée, appelée position opposée à l'arrêt fixe, le jet sera orienté d'un premier côté. Sur l'autre moitié du cycle de balayage correspondant au déplacement du bras de sa position opposée à l'arrêt fixe vers sa position d'arrêt fixe, le sens de rotation de la pompe 22 doit être inversé pour permettre l'orientation d'un jet de l'autre côté du balai. En première variante, la pompe bidirectionnelle pourrait être remplacée par deux pompes reliées chacune à l'un des deux gicleurs, et commandées alternativement. En deuxième variante, la pompe bidirectionnelle pourrait être remplacée par une pompe unique et un distributeur à deux sorties reliées chacune à l'un des deux gicleurs et commandées alternativement.

En pratique, le système de lave-vitre est activé de la même façon que le système d'essuyage, c'est-à-dire soit manuellement par une commande particulière sur le commodo 11, soit automatiquement suite à la détection de pluie.

Dans un tel système, on prévoit avantageusement de commander l'aspersion pendant une première période d'activation qui a lieu pendant une phase de montée du bras porte-balai sur la surface vitrée, et pendant une deuxième période d'activation du système de lave-vitre qui a lieu pendant une phase de descente du bras porte-balai sur la surface vitrée.

Comme cela a été indiqué précédemment, il est important que l'aspersion soit activée lorsque le bras porte-balai balaie une certaine zone bien définie de la surface vitrée. Or, les vitesses V_{Min} et V_{Max} du moteur d'essuyage sont des vitesses toutes théoriques qui sont en pratique rencontrées uniquement dans des conditions très particulières d'utilisation du véhicule (véhicule à l'arrêt et protégé des conditions climatiques, surface vitrée propre).

En pratique, le temps mis par le bras porte-balai pour atteindre effectivement la zone d'aspersion ne va pas être fonction de la seule vitesse V_{Min} ou V_{Max} du moteur d'essuyage, mais va dépendre également des conditions d'utilisation du véhicule.

Ainsi, si le véhicule est à l'arrêt, la vitesse du bras d'essuyage sur la phase de montée du bras sera généralement identique à la vitesse du bras d'essuyage sur la phase de descente du bras. En revanche, si le véhicule se déplace à grande vitesse, le bras associé à l'essuyage du pare-brise se déplacera beaucoup plus vite sur la phase de montée que sur la phase de descente. Il en va de même si la vitesse relative subie par le système bras-balai est importante, en raison de la vitesse du vent qui vient s'ajouter à la vitesse du véhicule.

De même, un bras d'essuyage ne se déplace pas à la même vitesse selon que la surface vitrée qu'il balaye est sèche ou mouillée, propre ou sale.

Aussi, conformément à un mode de réalisation préférentiel de l'invention, les instants de déclenchement de l'aspersion et/ou d'arrêt de l'aspersion correspondant d'une part, à la première période d'activation et d'autre part, de la deuxième période d'activation, vont être adaptés en temps réel en fonction des conditions d'utilisation du véhicule susceptibles de faire varier la vitesse du bras porte-balai pendant un cycle d'essuyage. Pour ce faire, un module de commande comporte des moyens 23 de calcul aptes à recevoir des informations sur différents paramètres relatifs aux conditions d'utilisation du véhicule, de manière à estimer en temps réel, sur chaque cycle d'essuyage, les variations de vitesse du bras porte-balai sur la surface vitrée en fonction de ces paramètres. A partir de ces paramètres, les moyens 23 de calcul vont pouvoir générer un signal de commande S com de la pompe bidirectionnelle ou de l'une des deux pompes 22 dont les instants de déclenchement et/ou d'arrêt d'aspersion seront adaptés pour chacune des périodes d'activation.

Selon l'invention, les variations de vitesse du bras porte-balai pourront être estimées à partir d'une information sur la vitesse théorique (V_{Min} ou V_{Max}) de balayage du système d'essuyage sélectionnée et d'une information sur la vitesse du véhicule. L'information sur la vitesse théorique pourra être obtenue par le commodo 11 ou le capteur de pluie 3 lorsque celui-ci déclenche automatiquement l'essuyage, et de là déclenche, en combiné le lavage. En variante, cette information pourra être obtenue par une sortie du moteur d'essuyage à laquelle les moyens de calcul 23 sont reliés. En outre, comme schématisé sur la figure, le module de commande peut être relié à une sortie du capteur 4 délivrant aux moyens 23 de calcul une information V sur la vitesse du véhicule.

Les variations de vitesse du bras porte-balai pourront être estimées en outre à partir d'une mesure de la température extérieure au véhicule, et éventuellement d'une mesure par un capteur d'hydrométrie. Une telle information permet en effet de déduire une information sur l'état sec ou mouillé de la surface vitrée et d'adapter en conséquence la période d'activation de l'aspersion. Pour ce faire, le module de commande peut être relié à une sortie du capteur 6 délivrant aux moyens 23 de calcul une information T sur la température véhicule.

L'information sur l'état sec ou mouillé de la surface vitrée peut également être obtenue du capteur 3 de pluie. En conséquence, les variations de vitesse du bras porte-balai pourront estimées également à partir d'une information relative à la détection de pluie, en prévoyant que le module de commande soit relié à une sortie du capteur 3 délivrant aux moyens 23 de calcul une information D₁ sur la détection de pluie.

En variante ou en combinaison, on peut prévoir également d'utiliser une information D₂ relative au degré de salissure sur la surface vitrée, fournie aux moyens de calcul 23 par la sortie du capteur 5 de salissure de la surface vitrée.

On peut en outre prévoir de mesurer les efforts subis par l'axe du moteur d'essuyage afin d'estimer la consommation de ce moteur 10. Dans ce cas, les moyens de calcul 23 reçoivent cette information délivrée par un moyen 12 de mesure de la consommation du moteur d'essuyage.

A partir des différentes informations récupérées par les moyens de calcul, il va être ainsi possible d'adapter l'activation et l'arrêt de l'aspersion en fonction des variations de la vitesse du bras porte-balai.

Cette adaptation peut consister à définir en temps réel une temporisation entre un instant de déclenchement du système d'essuyage et l'instant de déclenchement de l'aspersion, la temporisation étant fonction des variations de vitesse du bras porte-balai estimées. L'instant de déclenchement du système d'essuyage est par exemple déterminé par une information S_{AF} relative à la position arrêt fixe délivrée par le moteur d'essuyage. La durée d'aspersion proprement dite peut être alors fixe.

En variante, on peut choisir de conserver un instant de déclenchement de l'aspersion fixe par rapport à l'instant de déclenchement du système d'essuyage, l'adaptation se faisant alors sur l'instant d'arrêt d'aspersion. Dans ce cas, l'instant d'arrêt est défini par une temporisation à partir de l'instant de déclenchement du système d'essuyage, cette temporisation étant variable en fonction des paramètres d'utilisation du véhicule.

Enfin, pour une meilleure précision, on peut choisir de faire varier les deux instants de déclenchement et d'arrêt de l'aspersion en fonction des conditions d'utilisation du véhicule.

D'autres alternatives sont possibles sans départir du cadre de l'invention :

Ainsi, l'invention est également applicable pour un système d'essuyage à lave-vitre intégré pour lequel le ou les gicleurs sont disposés de telle manière que l'aspersion ne peut être effectuée que sur une phase montante, ou une phase descendante du bras sur un cycle de balayage.

## Revendications

1. Procédé de commande d'un système de lave-vitre intégré à un système d'essuyage d'une surface vitrée de véhicule automobile, ledit système d'essuyage comprenant un moteur (10) d'essuyage pour l'entraînement en rotation d'au moins un bras porte-balai, et le système de lave-vitre comportant au moins un gicleur (20) disposé sur ledit bras porte-balai ou sur le balai, et apte à délivrer, sur un cycle d'essuyage, au moins un jet de liquide en avant du balai par rapport à la direction de balayage pendant au moins une première période d'activation du système de lave-vitre définie entre un instant de déclenchement de l'aspersion du liquide et un instant d'arrêt de l'aspersion du liquide, **caractérisé en ce qu'**il consiste à estimer en temps réel, sur chaque cycle d'essuyage, les variations de vitesse du bras porte-balai sur la surface vitrée en fonction de paramètres relatifs aux conditions d'utilisation du véhicule, puis à adapter en conséquence l'instant de déclenchement et/ou l'instant d'arrêt de l'aspersion.

2. Procédé de commande selon la revendication 1, **caractérisé en ce que** les variations de vitesse du bras porte-balai sont estimées à partir d'une information sur une vitesse théorique (V_{Min}, V_{Max}) de balayage du système d'essuyage sélectionnée et d'une information (V) sur la vitesse du véhicule.

3. Procédé de commande selon la revendication 2, **caractérisé en ce que** les variations de vitesse du bras porte-balai sont estimées en outre à partir d'une mesure de la température (T) extérieure au véhicule.

4. Procédé de commande selon l'une quelconque des revendications 2 ou 3, **caractérisé en ce que** les variations de vitesse du bras porte-balai sont estimées en outre à partir d'une information (D₁) relative à la détection de pluie.

5. Procédé de commande selon l'une quelconque des revendications 2 à 4, **caractérisé en ce que** les variations de vitesse du bras porte-balai sont estimées en outre à partir d'une information (D₂) relative au degré de salissure sur la surface vitrée.

6. Procédé de commande selon l'une quelconque des revendications 2 à 5, **caractérisé en ce que** les variations de vitesse du bras porte-balai sont estimées en outre à partir d'une information (C) relative à la consommation du moteur (10) d'essuyage.

7. Procédé de commande selon l'une quelconque des revendications précédentes, **caractérisé en ce que** l'étape d'adaptation consiste à définir en temps réel une temporisation entre un instant de déclenchement du système d'essuyage et l'un et/ou l'autre desdits instants de déclenchement et d'arrêt de l'aspersion, la temporisation étant fonction des variations de vitesse du bras porte-balai estimées.

8. Procédé de commande selon la revendication 7, **caractérisé en ce que** l'instant de déclenchement du système d'essuyage est déterminé par une information (S_{AF}) relative à la position arrêt fixe délivrée par le moteur (10) d'essuyage.

9. Procédé de commande selon l'une quelconque des revendications précédentes, **caractérisé en ce que** ladite première période d'activation a lieu pendant une phase de montée du bras porte-balai sur la surface vitrée.

10. Procédé de commande selon la revendication 9, **caractérisé en ce que**, le système de lave-vitre comportant en outre au moins un gicleur supplémentaire disposé sur ledit bras porte-balai ou sur le balai, et apte à délivrer, sur un cycle d'essuyage, au moins un jet de liquide en avant du balai par rapport à la direction de balayage pendant une deuxième période d'activation du système de lave-vitre correspondant à une phase de descente du bras porte-balai sur la surface vitrée, l'instant de déclenchement et/ou l'instant d'arrêt de l'aspersion correspondant à la ladite deuxième période d'activation est également adapté à partir d'une estimation en temps réel, sur chaque cycle d'essuyage, des variations de vitesse du bras porte-balai sur la surface vitrée en fonction de paramètres relatifs aux conditions d'utilisation du véhicule.

11. Module de commande d'un système de lave-vitre intégré à un système d'essuyage d'une surface vitrée de véhicule automobile, ledit système d'essuyage comprenant un moteur (10) d'essuyage pour l'entraînement en rotation d'au moins un bras porte-balai, et le système de lave-vitre comportant au moins une pompe (22) apte à être reliée à un réservoir (21) de liquide de lavage et à au moins un gicleur (20) disposé sur ledit bras porte-balai ou sur le balai, ladite pompe étant commandée par un signal de commande (S_{Com}) de façon à délivrer, sur un cycle d'essuyage, au moins un jet de liquide en avant du balai par rapport à la direction de balayage pendant au moins une première période d'activation du système de lave-vitre définie entre un instant de déclenchement de l'aspersion du liquide et un instant d'arrêt de l'aspersion du liquide, **caractérisé en ce qu'**il comporte des moyens (23) de calcul recevant différentes informations relatives aux conditions d'utilisation du véhicule permettant d'estimer en temps réel, sur chaque cycle d'essuyage, les variations de vitesse du bras porte-balai sur la surface vitrée en fonction de paramètres relatifs aux conditions d'utilisation du véhicule, et à adapter en conséquence l'instant de déclenchement et/ou d'arrêt du signal de commande (S_{Com}).

12. Module de commande selon la revendication 11, **caractérisé en ce qu'**il est apte à être relié à une sortie du moteur (1) d'essuyage délivrant aux moyens (23) de calcul une information sur la vitesse théorique (V_{Min}, V_{Max}) du moteur (10) d'essuyage, et à une sortie d'un capteur (4) de vitesse du véhicule délivrant aux moyens (23) de calcul une information (V) sur la vitesse du véhicule.

13. Module de commande selon la revendication 12, **caractérisé en ce qu'**il est apte à être relié en outre à une sortie d'un capteur (3) de pluie délivrant aux moyens (23) de calcul une information (D₁) relative à la détection de pluie, et/ou d'un capteur (5) de salissure de la surface vitrée délivrant aux moyens (23) de calcul une information (D₂) sur le degré de salissure de la surface vitrée, et/ou d'un capteur (6) de température délivrant aux moyens (23) de calcul une information (T) sur la température extérieure au véhicule, et/ou d'un moyen (12) de mesure délivrant aux moyens (23) de calcul une information (C) sur la consommation du moteur d'essuyage.

14. Système d'essuyage d'une surface vitrée de véhicule automobile, **caractérisé en ce qu'**il comporte un module de commande selon l'une quelconque des revendications 11 à 13.

## Patentansprüche

1. Verfahren zur Steuerung eines in eine Wischanlage einer Glasfläche eines Kraftfahrzeugs integrierten Scheibenreinigungssystems, wobei diese Wischanlage einen Wischmotor (10) für den Drehantrieb mindestens eines Scheibenwischertragarms umfasst, und wobei das Scheibenreinigungssystem mindestens eine Sprühdüse (20) umfasst, die auf dem Scheibenwischertragarm oder auf dem Scheibenwischer angeordnet und geeignet ist, bei einem Wischzyklus mindestens einen Flüssigkeitsstrahl vor dem Scheibenwischer, bezogen auf die Wischrichtung, während mindestens einer ersten Aktivierungsperiode des Scheibenreinigungssystems zu liefern, die zwischen einem Zeitpunkt des Auslösens der Besprengung mit der Flüssigkeit und einem Zeitpunkt des Anhaltens der Besprengung mit der Flüssigkeit definiert ist, **dadurch gekennzeichnet, dass** es darin besteht, in Echtzeit bei jedem Wischzyklus die Geschwindigkeitsvariationen des Scheibenwischertragarms auf der Glasfläche in Abhängigkeit von Parametern in Zusammenhang mit den Verwendungsbedingungen des Fahrzeugs zu schätzen und dann in der Folge den Zeitpunkt des Auslösens und/oder den Zeitpunkt des Anhaltens der Besprengung anzupassen.

2. Steuerungsverfahren nach Anspruch 1, **dadurch gekennzeichnet, dass** die Geschwindigkeitsvariationen des Scheibenwischertragarms auf Basis einer Information über eine ausgewählte theoretische Wischgeschwindigkeit (V_{Min}, V_{Max}) des Wischsystems und einer Information (V) über die Geschwindigkeit des Fahrzeugs geschätzt wird.

3. Steuerungsverfahren nach Anspruch 2, **dadurch gekennzeichnet, dass** die Geschwindigkeitsvariationen des Scheibenwischertragarms ferner auf Basis einer Messung der Temperatur (T) außerhalb des Fahrzeugs geschätzt werden.

4. Steuerungsverfahren nach einem der Ansprüche 2 oder 3, **dadurch gekennzeichnet, dass** die Geschwindigkeitsvariationen des Scheibenwischertragarms ferner auf Basis einer Information (D₁) über die Erkennung von Regen geschätzt werden.

5. Steuerungsverfahren nach einem der Ansprüche 2 bis 4, **dadurch gekennzeichnet, dass** die Geschwindigkeitsvariationen des Scheibenwischertragarms ferner auf Basis einer Information (D₂) über den Verschmutzungsgrad der Glasfläche geschätzt werden.

6. Steuerungsverfahren nach einem der Ansprüche 2 bis 5, **dadurch gekennzeichnet, dass** die Geschwindigkeitsvariationen des Scheibenwischertragarms ferner auf Basis einer Information (C) über den Verbrauch des Wischmotors (10) geschätzt werden.

7. Steuerungsverfahren nach einem der vorhergehenden Ansprüche, **dadurch gekennzeichnet, dass** der Schritt der Anpassung darin besteht, in Echtzeit eine Verzögerung zwischen einem Zeitpunkt des Auslösens des Wischsystems und dem einen und/oder dem anderen der Auslöse- und Anhaltezeitpunkte der Besprengung zu definieren, wobei die Verzögerung von den geschätzten Geschwindigkeitsvariationen des Scheibenwischertragarms abhängt.

8. Steuerungsverfahren nach Anspruch 7, **dadurch gekennzeichnet, dass** der Auslösezeitpunkt des Wischsystems von einer Information (S_{AF}) über die feste Anhalteposition, die vom Wischmotor (10) geliefert wird, bestimmt wird.

9. Steuerungsverfahren nach einem der vorhergehenden Ansprüche, **dadurch gekennzeichnet, dass** die erste Aktivierungsperiode während einer Phase des Anhebens des Scheibenwischertragarms auf der Glasfläche stattfindet.

10. Steuerungsverfahren nach Anspruch 9, **dadurch gekennzeichnet, dass** das Scheibenreinigungssystem ferner mindestens eine zusätzliche Sprühdüse umfasst, die auf dem Scheibenwischertragarm oder auf dem Scheibenwischer angeordnet und geeignet ist, bei einem Wischzyklus mindestens einen Flüssigkeitsstrahl vor dem Scheibenwischer, bezogen auf die Wischrichtung, während einer zweiten Aktivierungsperiode des Scheibenreinigungssystems zu liefern, die einer Phase des Absenkens des Scheibenwischertragarms auf die Glasfläche entspricht, wobei der Zeitpunkt des Auslösens und/oder der Zeitpunkt des Anhaltens der Besprengung entsprechend der zweiten Aktivierungsperiode ebenfalls auf Basis einer Echtzeitschätzung der Geschwindigkeitsvariationen des Scheibenwischertragarms auf der Glasfläche bei jedem Wischzyklus in Abhängigkeit von Parametern in Zusammenhang mit den Verwendungsbedingungen des Fahrzeugs angepasst werden.

11. Modul zur Steuerung eines Scheibenreinigungssystems, das in eine Wischanlage einer Glasfläche eines Kraftfahrzeugs integriert ist, wobei das Wischsystem einen Wischmotor (10) für den Drehantrieb mindestens eines der Scheibenwischertragarme umfasst, und das Scheibenreinigungssystem mindestens eine Pumpe (22), die geeignet ist, mit einem Waschflüssigkeitsbehälter (21) verbunden zu werden, und mindestens eine Sprühdüse (20) umfasst, die auf dem Scheibenwischertragarm oder auf dem Scheibenwischer angeordnet ist, wobei die Pumpe durch ein Steuersignal (S_{Com}) derart gesteuert wird, dass sie bei einem Wischzyklus mindestens einen Flüssigkeitsstrahl vor dem Scheibenwischer, bezogen auf die Wischrichtung, während mindestens einer ersten Aktivierungsperiode des Scheibenreinigungssystems zu liefern, die zwischen einem Auslösezeitpunkt der Besprengung mit der Flüssigkeit und einem Anhaltezeitpunkt der Besprengung mit der Flüssigkeit definiert wird, **dadurch gekennzeichnet, dass** es Berechnungsmittel (23) umfasst, die verschiedene Informationen über die Verwendungsbedingungen des Fahrzeugs empfangen, die es ermöglichen, in Echtzeit bei jedem Wischzyklus die Geschwindigkeitsvariationen des Scheibenwischertragarms auf der Glasfläche in Abhängigkeit von Parametern in Zusammenhang mit den Verwendungsbedingungen des Fahrzeugs zu schätzen und als Folge den Auslöse- und/oder Anhaltezeitpunkt des Steuersignals (S_{Com}) anzupassen.

12. Steuerungsmodul nach Anspruch 11, **dadurch gekennzeichnet, dass** es geeignet ist, mit einem Ausgang des Wischmotors (1) verbunden zu werden, der an die Berechnungsmittel (23) eine Information über die theoretische Geschwindigkeit (V_{Min}, V_{Max}) des Wischmotors (10) liefert, und mit einem Ausgang eines Geschwindigkeitssensors (4) des Fahrzeugs, der an die Berechnungsmittel (23) eine Information (V) über die Geschwindigkeit des Fahrzeugs liefert.

13. Steuermodul nach Anspruch 12, **dadurch gekennzeichnet**, das es geeignet ist, ferner mit einem Ausgang eines Regensensors (3) verbunden zu werden, der an die Berechnungsmittel (23) eine Information (D₁) über die Erkennung von Regen liefert, und/oder eines Schmutzsensors (5) der Glasfläche der an die Berechnungsmittel (23) eine Information (D₂) über den Verschmutzungsgrad der Glasfläche liefert, und/oder eines Temperatursensors (6), der an die Berechnungsmittel (23) eine Information (T) über die Temperatur außerhalb des Fahrzeugs liefert, und/oder eines Messhilfsmittels (12), das an die Berechnungsmittel (23) eine Information (C) über den Verbrauch des Wischmotors liefert.

14. Wischanlage einer Glasfläche eines Kraftfahrzeugs, **dadurch gekennzeichnet, dass** sie ein Steuerungsmodul nach einem der Ansprüche 11 bis 13 umfasst.

## Claims

1. Method for controlling a window washer system incorporated into a wiper system for a glazed surface of a motor vehicle, the said wiper system comprising a wiper motor (10) for driving the rotation of at least one wiper-blade arm, and the window washer system comprising at least one nozzle (20) positioned on the said wiper-blade arm or on the blade, and able, in a wiping cycle, to deliver at least one jet of liquid ahead of the blade with respect to the direction of wiping during at least a first period of activation of the window washer system which period is defined between an instant marking the starting of the spraying of the liquid and an instant marking the stopping of the spraying of the liquid, **characterized in that** it consists in estimating, in real time, in each wiping cycle, the variations in the speed of the wiper-blade arm over the glazed surface as a function of parameters relating to the conditions of use of the vehicle, then in adapting the instant marking the starting and/or the instant marking the stopping of the spraying accordingly.

2. Control method according to Claim 1, **characterized in that** the variations in speed of the wiper-blade arm are estimated from a selected item of information relating to a theoretical wiping speed (V_{Min}, V_{Max}) of the wiper system and of information (V) relating to the speed of the vehicle.

3. Control method according to Claim 2, **characterized in that** the variations in speed of the wiper-blade arm are also estimated from a measurement of the temperature (T) outside the vehicle.

4. Control method according to either one of Claims 2 and 3, **characterized in that** the variations in speed of the wiper-blade arm are also estimated from information (D₁) relating to the detection of rain.

5. Control method according to any one of Claims 2 to 4, **characterized in that** the variations in speed of the wiper-blade arm are also estimated from information (D₂) relating to the degree of dirtiness of the glazed surface.

6. Control method according to any one of Claims 2 to 5, **characterized in that** the variations in speed of the wiper-blade arm are also estimated from information (C) relating to the power consumption of the wiper motor (10).

7. Control method according to any one of the preceding claims, **characterized in that** the adaptation step involves defining, in real time, a time delay between an instant marking the starting of the wiper system and one and/or the other of the said instants marking the starting and stopping of the spraying, the time delay being dependent on the estimated variations in the speed of the wiper-blade arm.

8. Control method according to Claim 7, **characterized in that** the instant marking the starting of the wiper system is determined by information (S_{AF}) relating to the fixed stop position delivered by the wiper motor (10).

9. Control method according to any one of the preceding claims, **characterized in that** the said first activation period takes place during an upsweep of the wiper-blade arm over the glazed surface.

10. Control method according to Claim 9, **characterized in that**, with the window washer system further comprising at least one additional nozzle located on the said wiper-blade arm or on the blade and able, in a wiping cycle, to deliver at least one jet of liquid ahead of the blade with respect to the direction of wiping during a second period of activation of the window washer system corresponding to a downstroke of the wiper-blade arm over the glazed surface, the instant marking the starting and/or the instant marking the stopping of the spray corresponding to the said second activation period is also adapted on the basis of a real-time estimate, in each wiping cycle, of the variations in speed of the wiper-blade arm over the glazed surface as a function of parameters relating to the conditions of use of the vehicle.

11. Module for controlling a window washer system incorporated into a wiper system for a glazed surface of a motor vehicle, the said wiper system comprising a wiper motor (10) for driving the rotation of at least one wiper-blade arm and the window washer system comprising at least one pump (22) able to be connected to a reservoir (21) of washing fluid and to at least one nozzle (20) positioned on the said wiper-blade arm or on the blade, the said pump being controlled by a control signal (S_{Com}) so that in a wiping cycle at least one jet of liquid is delivered ahead of the blade with respect to the direction of wiping during at least a first period of activation of the window washer system which period is defined between an instant marking the starting of the spraying of the liquid and an instant marking the stopping of the spraying of the liquid, **characterized in that** it comprises computation means (23) receiving various items of information relating to the conditions of use of the vehicle so that the variations in speed of the wiper-blade arm over the glazed surface can be estimated in real time as a function of parameters relating to the conditions of use of the vehicle and the instant marking the starting and/or the stopping of the control signal (S_{Com}) can be adapted accordingly.

12. Control module according to Claim 11, **characterized in that** it is able to be connected to an output of the wiper motor (1) delivering to the computation means (23) information regarding the theoretical speed (V_{Min}, V_{Max}) of the wiper motor (10) and to an output of a vehicle speed sensor (4) delivering information (V) regarding the speed of the vehicle to the computation means (23).

13. Control module according to Claim 12, **characterized in that** it is also able to be connected to an output of a rain sensor (3) delivering information (D₁) relating to the detection of rain to the computation means (23), and/or of a sensor (5) that senses the dirtiness of the glazed surface and delivers information (D₂) to the computation means (23) regarding the level of dirtiness of the glazed surface, and/or of a temperature sensor (6) that delivers information (T) about the temperature outside the vehicle to the computation means (23), and/or of a measurement means (12) delivering information (C) regarding the power consumption of the wiper motor to the computation means (23).

14. Wiper system for wiping a glazed surface of a motor vehicle, **characterized in that** it comprises a control module according to any one of Claims 11 to 13.
